(19) Europäisches Patentamt
European Patent Office
Office européen des brevets

(11) EP 4 576 566 A1

(12) **DEMANDE DE BREVET EUROPEEN**

(43) Date de publication:
**25.06.2025 Bulletin 2025/26**

(21) Numéro de dépôt: **24219919.8**

(22) Date de dépôt: **13.12.2024**

(51) Classification Internationale des Brevets (IPC):
**H02S 50/00** *(2014.01)*

(52) Classification Coopérative des Brevets (CPC):
**H02S 50/00**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **22.12.2023 FR 2315092**

(71) Demandeur: **TSE**
**06560 Valbonne Sophia Antipolis (FR)**

(72) Inventeurs:
• **BURTIN, Denis**
**38210 Vourey (FR)**
• **PITON, Félix**
**69007 Lyon (FR)**
• **BARBIER, Thibaut**
**06220 Vallauris (FR)**
• **IAZ, Zakaria**
**38080 L'Isle d'Abeau (FR)**
• **JULIEN, Alan**
**06220 Vallauris (FR)**

(74) Mandataire: **Murgitroyd & Company**
**165-169 Scotland Street**
**Glasgow G5 8PL (GB)**

(54) **PROCÉDÉ MIS EN OEUVRE PAR ORDINATEUR POUR OPTIMISER LA PRODUCTION D'ÉLECTRICITÉ D'UN DISPOSITIF PHOTOVOLTAÏQUE ET CENTRALE PHOTOVOLTAÏQUE AINSI OPTIMISÉE**

(57) La présente invention concerne un procédé mis en oeuvre par ordinateur pour optimiser la production d'électricité d'une centrale photovoltaïque comprenant une pluralité d'unités de production d'électricité, le procédé comprenant les étapes suivantes :
- Obtenir un modèle mathématique de la centrale photovoltaïque,
- Calculer, pour un moment déterminé, au moyen du modèle mathématique et de la position du soleil à ce moment déterminé, la production d'électricité de la centrale photovoltaïque pour une pluralité d'orientations pour chacune de ladite pluralité d'unités de production d'électricité,
- Sélectionner, parmi cette pluralité d'orientations, une orientation déterminée pour chacune des unités de production d'électricité qui correspond à un ensemble de positions optimales pour produire de l'électricité au moyen de la centrale photovoltaïque, et
- Générer des instructions pour que les moyens de commande orientent chacune des unités de production d'électricité vers leur orientation déterminée respective.

[Fig. 6]

EP 4 576 566 A1

**Description**

**Domaine de l'invention**

L'invention concerne un procédé mis en oeuvre par ordinateur pour optimiser la production d'électricité d'une centrale photovoltaïque, la centrale photovoltaïque comprenant une pluralité d'unités de production d'électricité, les unités de production d'électricité étant chacune conçues pour modifier leur orientation par rapport au soleil, les unités de production d'électricité étant connectées à des moyens de commande pour contrôler ladite orientation.

Plus précisément, l'invention concerne un procédé de gestion d'une centrale photovoltaïque, telle qu'une centrale agrivoltaïque et une telle centrale, dans laquelle le positionnement des panneaux photovoltaïque peut être contrôlé de façon à optimiser la production d'électricité générale de la centrale pendant la journée et pendant l'année. Selon un mode de réalisation de l'invention, la présence de l'ombrage sur au moins une partie des panneaux photovoltaïques peut être prise en compte pour optimiser ladite production d'électricité générale de la centrale.

**Etat de la technique**

Dans l'état de l'art, il est connu d'utiliser un système de suivi en arrière (en langue anglaise : « backtracking ») pour optimiser la production d'électricité à l'aide de panneaux photovoltaïques. Ce système de suivi en arrière est conçu pour des panneaux photovoltaïques installés sur des terrains aux pentes régulières. Ce système de suivi n'est pas adapté pour des panneaux photovoltaïques installés dans une structure « en vague » telle qu'une canopée. Selon l'art antérieur, des panneaux photovoltaïques sont, par exemple, fixés ensemble sur des structures nommées « tables », un ensemble de tables formant une centrale photovoltaïque.

Pour optimiser la production d'électricité à l'aide des panneaux photovoltaïques, les panneaux sont orientables pour être positionnés en direction du soleil. Typiquement, les panneaux sont orientables à l'aide d'un système de suivi (en langue anglaise : « tracking ») pour suivre le mouvement du soleil pendant la journée et pour adapter l'orientation des panneaux pendant l'année.

De façon habituelle, les tables, sur lesquelles les panneaux photovoltaïques sont montés, sont positionnées dans une première position, telle qu'une position essentiellement horizontale. A partir de ladite première position, les tables sont orientées, à l'aide des moteurs en direction du soleil pour maximiser leur production d'électricité.

Pour optimiser la production d'électricité des tables placées le plus près du soleil, les tables doivent être tournées d'un angle égal à l'élévation projetée du soleil. En revanche, avec une telle orientation il est possible que les tables les plus proches du soleil créent des ombres sur les panneaux photovoltaïques des tables adjacentes, entrainant une chute de la production d'électricité.

Pour éviter une telle chute de la production d'électricité, selon l'art antérieur, les tables suivent de préférence le mouvement imposé par le backtracking consistant à orienter les tables autant que possible face au soleil sans se faire d'ombre mutuellement.

Un premier inconvénient des solutions connues de l'art antérieur réside dans le fait que le système de backtracking comme paramètre d'entrée ne prend en compte que l'évitement de la formation d'ombres sur les panneaux solaires. Toutefois, éviter les ombres ne permet pas nécessairement de maximiser la production d'électricité avec l'ensemble de l'installation.

De plus, le système de backtracking ne prend en compte ni branchement spécifique des cellules qui forment ensemble un panneau photovoltaïque ni l'effet d'une ombre sur une partie desdites cellules pour la production d'électricité du panneau. Cela veut dire que le backtracking ne prend pas non plus en compte l'ombre partielle sur une partie des panneaux photovoltaïques d'une centrale et l'effet de cet ombre sur la production d'électricité globale de ladite centrale.

Un autre inconvénient, selon l'art antérieur, réside dans le fait que des ombres ponctuelles, qui peuvent être créées pendant la journée, ne sont pas non plus prises en compte pendant le backtracking. Ces ombres ponctuelles résultent, par exemple, de la présence d'un objet proche de la centrale, tel qu'un poteau ou un arbre. Les ombres ponctuelles peuvent également être formées par des éléments de construction de la centrale électrique elle-même, tels que des câbles ou des poteaux faisant partie de la structure porteuse de la centrale ou d'autres éléments faisant partie de la structure porteuse de la centrale ou de l'environnement proche de la centrale. Préférablement, l'effet de tels ombrages ponctuels sur la production globale d'électricité d'une centrale photovoltaïque devrait être maitrisé.

Par conséquent, au regard de ce qui précède, il apparait nécessaire de proposer une solution permettant la gestion optimisée d'une centrale photovoltaïque, telle qu'une centrale agrivoltaïque, dans laquelle le positionnement des tables peut être contrôlé de façon à optimiser la production d'électricité globale d'une telle centrale pendant la journée et l'année.

**Objet de l'invention**

L'objet de la présente invention concerne un procédé mis en oeuvre par ordinateur pour optimiser la production d'électricité au moyen d'une centrale photovoltaïque, la centrale photovoltaïque comprenant une pluralité d'unités de production d'électricité, les unités de production d'électricité étant chacune adaptées pour modifier leur orientation par rapport au soleil afin d'optimiser leur production d'électricité à tout moment, les unités de production d'électricité étant connectées à des moyens de commande pour contrôler ladite orientation, le procédé comprenant les étapes suivantes :

- Obtenir un modèle mathématique de la centrale photovoltaïque comprenant les positions des différentes unités de production d'électricité, les distances mutuelles entre ces unités, l'irradiance et la position du soleil par rapport à la centrale photovoltaïque,

- Calculer, pour un moment déterminé, au moyen du modèle mathématique et de la position du soleil à ce moment déterminé, la production d'électricité de la centrale photovoltaïque pour une pluralité d'orientations pour chacune de ladite pluralité d'unités de production d'électricité, en tenant compte pour chacune des unités de production d'électricité de leur orientation instantanée et de leur production d'électricité instantanée correspondante,

- Sélectionner, parmi cette pluralité d'orientations, une orientation déterminée pour chacune des unités de production d'électricité qui correspond à un ensemble de positions optimales, et

- Générer des instructions pour que les moyens de commande orientent chacune des unités de production d'électricité vers leur orientation déterminée respective.

Selon un mode de réalisation de l'invention, le modèle mathématique comprend des paramètres définissant la zone de l'implantation de la centrale photovoltaïque, telles que la latitude, la longitude, l'altitude, l'orientation, l'albédo du sol.

Selon un mode de réalisation de l'invention, l'étape de calcul pour le moment déterminé, au moyen du modèle mathématique et de la position du soleil à ce moment déterminé, de la production d'électricité de la centrale photovoltaïque pour une pluralité d'orientations pour chacune de ladite pluralité d'unités de production d'électricité comprend :

a) Calculer, pour une première orientation de la pluralité d'unités de production d'électricité, une première production instantanée d'électricité de la centrale photovoltaïque,

b) Modifier l'orientation d'au moins une première unité de production d'électricité de ladite pluralité d'unités de production d'électricité pour obtenir une orientation modifiée de la pluralité d'unités de production d'électricité,

c) Calculer pour l'orientation modifiée de la pluralité d'unités de production d'électricité une production instantanée modifiée d'électricité de la centrale photovoltaïque, et

d) Répéter les étapes b) et c) pour ainsi obtenir la production instantanée de l'électricité de la centrale photovoltaïque pour une pluralité d'orientations pour chacune de ladite pluralité d'unités de production d'électricité.

Selon un mode de réalisation de l'invention, le procédé comprend en outre :

- Quantifier, à l'aide du modèle mathématique, la présence d'au moins une ombre créée par au moins une unité de production d'électricité sur une autre unité de production d'électricité au moment déterminé, pour identifier une unité de production d'électricité ombragée,

- Réduire, à l'aide du modèle mathématique, la production d'électricité estimée de ladite unité de production d'électricité ombragée, et

- Calculer, pour ce moment déterminé, au moyen du modèle mathématique et de la production d'électricité estimée réduite pour l'unité de production d'électricité ombragée, la production d'électricité de la centrale photovoltaïque pour une pluralité d'orientations pour chacune de ladite pluralité d'unités de production d'électricité et

- Sélectionner, parmi cette pluralité d'orientations, une orientation déterminée pour chacune des unités de production d'électricité qui correspond à une position optimale pour produire de l'électricité au moyen de la centrale photovoltaïque au moment déterminé en prenant en compte la production d'électricité estimée réduite pour ladite unité de production d'électricité ombragée.

Selon un mode de réalisation de l'invention, le modèle mathématique comprend des paramètres définissants des éléments structurels de la centrale photovoltaïque et/ou des paramètres définissants des objets à proximité de la centrale photovoltaïque, le procédé comprenant en outre :

- Quantifier, à l'aide du modèle mathématique, la présence d'au moins une ombre créée par un élément structurel de la centrale photovoltaïque et/ou un objet à proximité de la centrale photovoltaïque sur une unité de production d'électricité au moment déterminé, pour identifier une unité de production d'électricité ombragée,

- Réduire, à l'aide du modèle mathématique, la production d'électricité estimée dudit module de production d'électricité ombragé, et

- Calculer, pour ce moment déterminé, au moyen du modèle mathématique et de la production d'électricité estimée réduite pour l'unité de production d'électricité ombragée, la production d'électricité de la centrale photovoltaïque pour une pluralité d'orientations pour chacune de ladite pluralité d'unités de production d'électricité, et

- Sélectionner, parmi cette pluralité d'orientations, une orientation déterminée pour chacune des unités de production d'électricité qui correspond à un ensemble de positions optimales pour produire de l'électricité au moyen de la centrale photovoltaïque au moment déterminé en prenant en compte la production d'électricité estimée réduite pour ladite unité de production d'électricité ombragée.

Selon un mode de réalisation de l'invention, la production d'électricité estimée pour l'unité de production d'électricité ombragée est réduite conformément à une fonction mathématique préalablement établie à l'aide des caractéristiques électriques dudit module ombragé et de sa connexion électrique.
Selon un deuxième aspect, l'invention concerne une centrale photovoltaïque pour la production d'électricité comprenant :

- Une pluralité d'unités de production d'électricité, les unités de production d'électricité étant chacune conçues pour modifier leur orientation par rapport au soleil afin d'optimiser leur production d'électricité à tout moment, les unités de production d'électricité étant connectées à des moyens de commande pour contrôler ladite orientation,

- des moyens de calcul adaptés pour héberger un modèle mathématique pour la centrale photovoltaïque comprenant les positions des différentes unités de production d'électricité, les distances mutuelles entre ces unités, l'irradiance et la position du soleil par rapport à la centrale photovoltaïque, et adaptés pour calculer pour un moment déterminé, au moyen du modèle mathématique et de la position réelle du soleil, la production d'électricité de la centrale photovoltaïque pour une pluralité d'orientations pour chacune de ladite pluralité d'unités de production d'électricité, en tenant compte, pour chacune des unités de production d'électricité, de leur orientation instantanée et de leur production instantanée d'électricité correspondante, les moyens de calcul étant en outre adaptés à la sélection, parmi ladite pluralité d'orientations, d'une orientation déterminée pour chacune des unités de production d'électricité qui correspond à une position optimale pour produire de l'électricité au moyen de la centrale photovoltaïque au moment déterminé, et à la génération d'instructions pour les moyens de commande, et

- des moyens de contrôle connectés aux moyens de calcul et adaptés pour recevoir des instructions desdits moyens de calcul et pour orienter chacune des unités de production d'électricité vers leur orientation respective déterminée.

Selon un mode de réalisation de l'invention, la centrale photovoltaïque comprend au moins une unité de production d'électricité avec un premier module connecté en parallèle avec au moins un deuxième module adjacent, le premier et le deuxième module comprenant des cellules productrices d'électricité, l'unité de production d'électricité étant pourvue de diodes de shunt permettant la création d'un chemin pour le courant électrique entre une entrée et une sortie de l'unité de production d'électricité.
Selon un troisième aspect, l'invention concerne un produit programme d'ordinateur comprenant des instructions qui, lorsque le programme est exécuté par un ordinateur, conduisent celui-ci à mettre en oeuvre le procédé mentionné ci-dessus.
Selon un quatrième aspect, l'invention concerne un support d'enregistrement lisible par ordinateur comprenant des instructions qui, lorsqu'elles sont exécutées par un ordinateur, conduisent celui-ci à mettre en oeuvre le procédé mentionné ci-dessus.

## Brève description des dessins

Les but, objet et caractéristiques de l'invention apparaîtront plus clairement à la lecture de la description qui suit faite en référence aux figures dans lesquelles :

[Fig. 1] montre un exemple d'une partie d'une centrale photovoltaïque positionnée au-dessus d'une parcelle agricole, selon un mode de réalisation de l'invention ;

[Fig. 2] montre de façon schématique des tables d'une centrale photovoltaïque dans une première position, essentiellement horizontale, selon l'art antérieur ;

[Fig. 3] montre de façon schématique les tables selon la figure 2 dans d'une deuxième position, orientée vers le soleil, selon l'art antérieur ;

[Fig. 4] montre un modèle en géométrie bidimensionnelle de l'ombrage d'une table sur une table adjacente, selon un mode de réalisation de l'invention ;

[Fig. 5] montre en graphique une validation expérimentale du modèle d'irradiation globale efficace, selon un mode de réalisation de l'invention ;

[Fig. 6] montre l'exemple de neuf panneaux photovoltaïque branchés en série sur une table, selon un mode de réalisation de l'invention ;

[Fig. 7] montre le câblage des cellules des demi-modules d'un panneau photovoltaïque, selon un mode de réalisation de l'invention ;

[Fig. 8] montre la fraction efficace pour produire de l'électricité du rayonnement solaire incident sur une table en fonction de la fraction linéique ombragée de celle-ci, selon un mode de réalisation de l'invention.

## Description détaillée de l'invention

La description détaillée ci-après a pour but d'exposer l'invention de manière suffisamment claire et complète, notamment à l'aide d'exemples, mais ne doit en aucun cas être regardée comme limitant l'étendue de la protection aux modes de réalisation particuliers et aux exemples présentés ci-après.

Dans la description qui suit, le terme « ensemble de positions optimales » est utilisé. Avec le terme « ensemble de positions optimales » référence est faite à l'ensemble des orientations des unités de production d'électricité pour lesquelles la production d'électricité calculée est la plus élevée parmi tous les ensembles d'orientations testées. Les orientations « testées » sont l'ensemble des orientations identifiées et pour lesquelles un calcul de performance a été effectué.

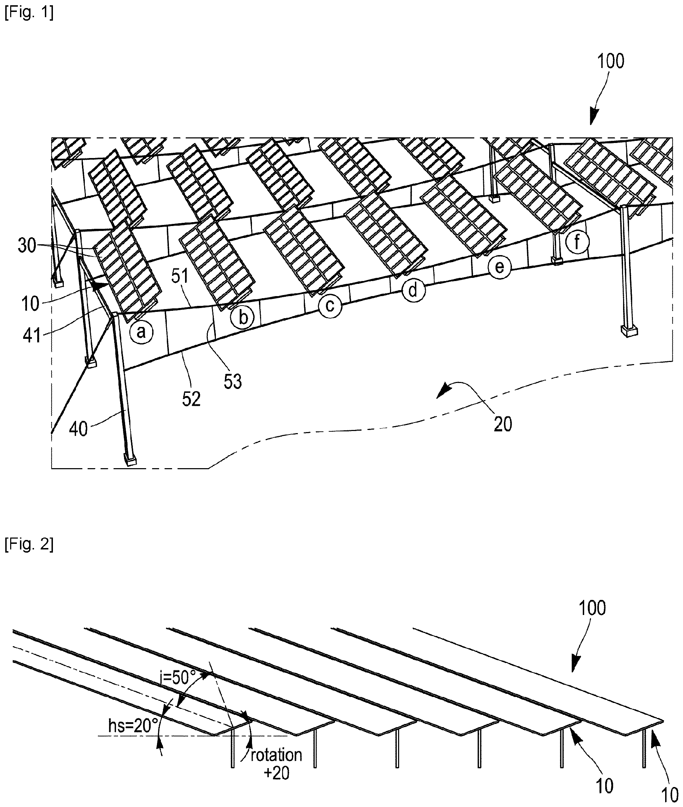

La figure 1 montre un exemple d'une partie d'une centrale photovoltaïque 100 positionnée au-dessus d'une parcelle agricole. La centrale photovoltaïque 100 comprend des tables 10 sur lesquelles sont fixés des panneaux photovoltaïques 30. Les tables 10 sont accrochées à un ensemble de câbles tendus au-dessus de la parcelle agricole 20. L'ensemble des câbles comprend des câbles supérieurs 51 et des câbles inferieurs 52, mutuellement connectés à l'aide de tendeurs 53.

Les câbles 51 supérieurs et les câbles inferieurs 52 sont, à leur extrémités respectives, fixés auprès des extrémités supérieures des poteaux 40. Les poteaux 40 soutenant ces câbles 51 et 52 ont, par exemple, une hauteur d'environ 8 m et sont espacés, par exemple, d'environ 27 m, permettant le passage de la plupart des engins agricoles. En leurs extrémités supérieures, les poteaux 40 sont connectés à l'aide des traverses 41.

La centrale photovoltaïque 100 selon la figure 1 est un exemple d'une centrale « agrivoltaïque ». Une telle centrale photovoltaïque est définie comme une installation de production d'électricité utilisant l'énergie radiative du soleil, dont les panneaux photovoltaïques sont situés sur une parcelle agricole où ils permettent de maintenir ou de développer durablement une production agricole.

Dans l'exemple de la figure 1, les panneaux photovoltaïques 30 sont fixés sur les tables 10 par série de neuf panneaux 30 par table 10.

Un des facteurs prépondérants pour l'efficacité d'une centrale photovoltaïque 100 selon la figure 1 est l'optimisation du partage de la lumière, aussi bien nécessaire à la croissance des végétaux présents sur la parcelle agricole 20 qu'à la production électrique à l'aide des panneaux photovoltaïques 30. Pour assurer ce partage tout en maximisant la production d'énergie, les panneaux photovoltaïques 30 sont typiquement orientés et montés sur des moteurs permettant leur rotation d'Est en Ouest autour d'un axe Nord-Sud. Grâce à cette orientation et ce montage, les panneaux photovoltaïques 30 peuvent suivre de manière optimale le mouvement du soleil pendant la journée et pendant les jours de l'année. Les tables 10 sont fixées sur les câbles supérieurs 51 à l'aide de fixations permettant la rotation des tables 10 par rapport aux câbles 51. Lesdites fixations comprennent des moteurs adaptés pour recevoir des instructions concernant la meilleure orientation des tables. Les fixations opposées de chaque table 10 forment un axe de rotation pour la table 10 considérée.

Les fixations des tables 10 aux câbles 51 comprennent, par exemple, des berceaux (non montrés sur la figure 1).

Lesdits berceaux sont adaptés pour être, d'un côté, fixés sur les câbles 51 et, de l'autre côté, pour fournir des sièges permettant de recevoir les extrémités opposées des tables 10.

Dans l'industrie photovoltaïque et dans le contexte de la présente description, l'utilisation des actionneurs pour correctement positionner les panneaux 30 par rapport à la position du soleil est appelé le « tracking » solaire.

Pour permettre un montage, tel que décrit ci-dessus, les poteaux 40 sont typiquement positionnés de façon Est-Ouest pour ainsi permettre aux câbles 51, 52 de s'étendre dans une direction essentiellement Est-Ouest et pour orienter les tables 10 avec leurs axes de rotation respectifs dans la direction Nord-Sud.

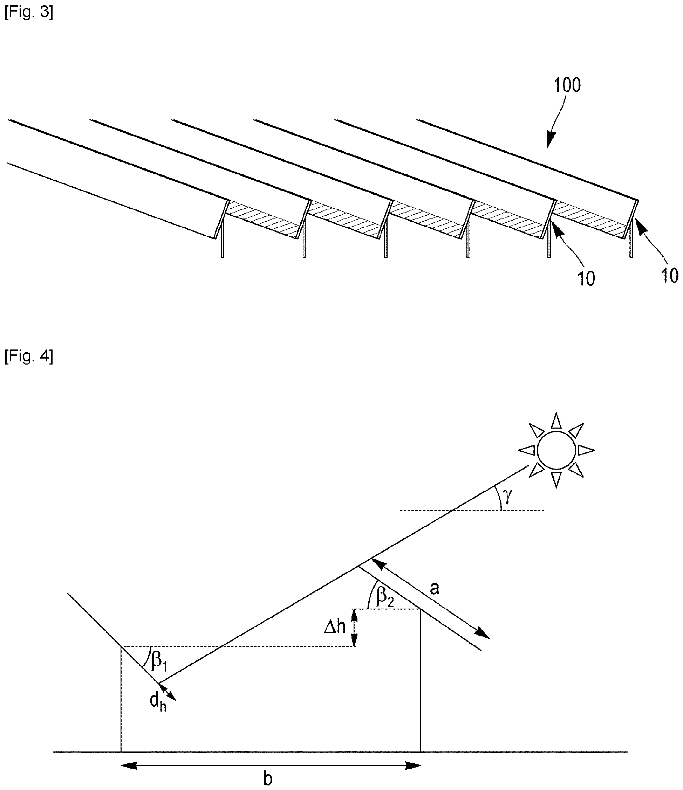

Les figures 2 et 3 montrent, de façon schématique, le concept de backtracking selon l'art antérieur. Dans cet exemple, le soleil est placé à gauche des images et a une élévation projetée dans le plan de l'image de 20°.

Selon la figure 2, les tables 10 sont positionnées de façon essentiellement horizontale, dans une première position. A partir de la première position telle que montrée dans la figure 2, les tables 10 sont orientées, à l'aide des moteurs (non montrés dans les figures 2 et 3) en direction du soleil pour maximiser leur production d'électricité.

Pour optimiser la production d'électricité de la table présentée à gauche de la figure 3, les tables 10 doivent être tournées d'un angle de 20°, grâce à l'élévation projetée du soleil dans cet exemple. En revanche, avec une telle orientation les panneaux photovoltaïques des tables 10 adjacentes s'ombrent mutuellement, entrainant une chute de la production de l'électricité. La présence des ombres est montrée dans la figure 3 à l'aide des surfaces ombragées.

Pour éviter une telle chute de la production, selon l'art antérieur, les tables 10 suivent de préférence le comportement de backtracking consistant à s'orienter autant que possible face au soleil sans se faire d'ombre mutuellement.

Compte tenu des observations ci-dessus, une première considération est que les figures 2 et 3 montrent bien que le backtracking se calcule relativement facilement pour des tables 10 toutes situées à la même altitude. En revanche, la situation est plus complexe avec des tables 10 montées sur des câbles 51, 52 selon l'exemple de la figure 1.

En faisant référence à la figure 1, sur les six tables 10 accrochées entre chaque paire de poteaux 40 consécutifs, les deux tables 10 les plus proches des poteaux seront aux altitudes les plus élevées et celles situées au centre des câbles 51, 52 aux altitudes les plus basses.

Les différences de hauteur des six tables 10 situées le long des câbles 51, 52 font que la création des surfaces ombragées des tables 10 sur des tables 10 voisines est différente pour les tables 10 selon leur position dans une rangée de tables 10 et selon aussi la période de la journée et/ou la période de l'année et selon l'angle de tracking pris par lesdites tables 10.

Une deuxième considération est le fait que le système backtracking selon l'art antérieur ne prend en compte que le réglage de la centrale photovoltaïque 100 avec l'évitement des ombres comme seul paramètre d'entrée. Or, ceci ne conduit pas automatiquement à la maximisation de la production d'électricité de la centrale photovoltaïque 100. De plus, un tel réglage ne prend pas en compte les présences des ombrages ponctuels sur une table 10. Des tels ombrages ponctuels peuvent être liés à la présence d'un objet haut, tel qu'un arbre par exemple à côté d'une des tables 10. Un tel objet pourrait créer une ombre sur une ou plusieurs tables, pendant, par exemple, une partie de la journée.

Il est à noter également, que, dans la structure de la centrale photovoltaïques 100 selon la figure 1, les tables 10 sont fixées dans une structure comportant des éléments, tels que des poteaux 40, des traverses 41, des berceaux et des câbles 51, 52. Ce type de construction crée le risque d'avoir des ombres ponctuelles causés par des éléments constitutifs de la centrale photovoltaïque 100 elle-même. De plus, il est à noter que le risque d'avoir des ombres ponctuelles causés par des éléments constitutifs de la centrale elle-même est beaucoup plus grand pour une centrale agrivoltaïque du type selon la figure 1 que dans des centrales photovoltaïques standards, avec des panneaux directement fixés sur le sol.

Le but de l'invention est de proposer une méthode de gestion d'une centrale photovoltaïque, telle qu'une centrale agrivoltaïque et une telle centrale, dans laquelle le positionnement des tables 10 peut-être contrôlé de façon à optimiser la production d'électricité générale pour toute l'installation.

Dans un premier temps, l'invention concerne un procédé mis en oeuvre par ordinateur pour optimiser la production d'électricité d'une centrale photovoltaïque 100 dans lequel la centrale photovoltaïque 100 comprend une pluralité d'unités de production d'électricité, telles que des panneaux photovoltaïques 30. Lesdites unités de production d'électricité sont chacune conçues pour modifier leur orientation par rapport au soleil afin d'optimiser leur production d'électricité à tout moment. Pour permettre à un opérateur de contrôler ladite orientation, les unités de production d'électricité sont connectées à des moyens de commande.

Le procédé selon l'invention comprend plusieurs étapes.

Pour commencer, il faut obtenir un modèle mathématique de la centrale photovoltaïque 100 comprenant les positions des différentes unités de production d'électricité 30, les distances mutuelles entre ces unités 30, l'irradiance et la position du soleil par rapport à la centrale photovoltaïque 100.

Ensuite, on doit calculer, pour un moment déterminé, au moyen du modèle mathématique et de la position du soleil à ce moment déterminé, la production d'électricité de la centrale photovoltaïque 100 pour une pluralité d'orientations pour chacune de ladite pluralité d'unités de production d'électricité 30. Pour ces calculs, l'utilisateurs doit tenir compte pour chacune des unités de production d'électricité 30 de leur orientation instantanée et de leur production d'électricité instantanée correspondante.

Dans une étape suivante, on doit sélectionner, parmi cette pluralité d'orientations, une orientation déterminée pour chacune des unités de production d'électricité 30 qui correspond à un ensemble de positions optimales pour produire de l'électricité au moyen de la centrale photovoltaïque 100.

A l'aide des étapes précédentes, le procédé selon l'invention permet de générer des instructions pour que les moyens de commande orientent chacune des unités de production d'électricité vers leurs orientations déterminées respectives.

L'effet technique du procédé selon l'invention est qu'à tout moment, la production instantanée pour toutes les positions possibles des panneaux photovoltaïques 30 et de toutes les positions relatives des panneaux photovoltaïques 30 est connue, de sorte que l'utilisateur connaît l'orientation idéale de tous les panneaux photovoltaïques 30 pour maximiser la production d'électricité de l'ensemble de la centrale photovoltaïque 100.

Un des avantages de l'invention réside dans le fait que la présence d'un ou plusieurs panneaux photovoltaïques 30 partiellement à l'ombre peut être acceptée, à condition que la production totale d'électricité de la centrale photovoltaïque 100 soit maximisée.

Comme indiqué ci-dessus, le modèle mathématique de la centrale photovoltaïque 100 selon l'invention comprend les positions des différentes unités de production d'électricité 30. Selon un mode de réalisation de l'invention, le modèle mathématique comprend des paramètres définissant la zone de l'implantation de la centrale photovoltaïque 100, tels que la latitude, la longitude, l'altitude, l'orientation, l'albédo du sol.

Il est à noter que pour la modélisation trois types d'entrées sont utilisés.

Le premier type d'entrées concerne les ombres. Ces entrées comprennent des paramètres concernant :

- les tables (dimensions, coordonnées spatiales dynamiques),
- des autres objets faisant de l'ombre (leurs dimensions, leur coordonnées spatiales statiques),
- la position du soleil (élévation, azimut) et
- les angles de tracking.

Ces entrées sont traitées à l'aide de fonctions mathématiques pour obtenir la fraction ombragée des tables photovoltaïques 30.

Le deuxième type d'entrées concerne la lumière. Ces entrées comprennent des paramètres concernant :

- le site (latitude, longitude, altitude, orientation, albedo, IAM),
- les données d'irradiation horizontales (GHI, BHI, DHI),
- les angles de tracking, et
- la distance Terre - Soleil.

Ces entrées sont traitées à l'aide de fonctions mathématiques pour obtenir les irradiances directe, diffuse et réfléchie sur le plan incliné des modules en tracking (BTI, DTI, RTI).

Le troisième type d'entrées concerne la production d'électricité. Ces entrées comprennent des paramètres concernant :

- les résultats concernant les ombres susmentionnées (Fraction ombragée),
- les résultats concernant la lumière (BTI, DTI, RTI), et
- le câblage électrique de la centrale photovoltaïque 100.

Ces entrées sont traitées à l'aide de fonctions mathématiques pour obtenir la production d'électricité instantanée, simulée.

Dans une phase d'optimisation, lesdits résultats concernant la production d'électricité instantanée, simulée ensemble avec des paramètres de backtracking possibles (cela veut dire l'ensemble des valeurs possibles dont on cherche la combinaison optimale) sont utilisés pour obtenir des paramètres de backtracking optimaux et le pourcentage de gain de production d'électricité attendu ensemble avec une indication de la répartition des gains attendus en fonction des paramètres.

Pour identifier l'orientation optimale des tous les panneaux photovoltaïques 30 des calculs itératifs peuvent être employés, dans lequel l'étape de calcul pour le moment déterminé, au moyen du modèle mathématique et de la position du soleil à ce moment déterminé, de la production d'électricité de la centrale photovoltaïque 100 pour une pluralité d'orientations pour chacune de ladite pluralité d'unités de production d'électricité comprend :

    a) Calculer, pour une première orientation de la pluralité d'unités de production d'électricité, une première production instantanée d'électricité de la centrale photovoltaïque 100,

b) Modifier l'orientation d'au moins une première unité de production d'électricité 30 de ladite pluralité d'unités de production d'électricité pour obtenir une orientation modifiée de la pluralité d'unités de production d'électricité,

c) Calculer pour l'orientation modifiée de la pluralité d'unités de production d'électricité une production instantanée modifiée d'électricité de la centrale photovoltaïque 100, et

d) Répéter les étapes b) et c) pour ainsi obtenir la production instantanée de l'électricité de la centrale photovoltaïque 100 pour une pluralité d'orientations pour chacune de ladite pluralité d'unités de production d'électricité.

Selon un mode de réalisation de l'invention, un modèle géométrique bidimensionnel est utilisé pour quantifier la fraction ombragée de chaque table 10 d'une centrale photovoltaïque, telle qu'une centrale agrivoltaïque en fonction du temps, liée à la présence des tables 10 voisines. Dans un deuxième temps, ce modèle est couplé d'une part avec les données d'altitude réelle de chaque table et d'autre part avec les modèles de décomposition angulaire du rayonnement solaire pour produire, en fonction du temps, une estimation de l'irradiation globale inclinée efficace reçue par chaque table. En langue anglaise, le terme Global Tilted Irradiance, ou GTI est utilisé pour faire référence à ladite irradiation globale efficace reçue par chaque table.

Un modèle en géométrie bidimensionnelle de l'ombrage d'une table sur une table adjacente a été développé et est montré en faisant référence à la figure 4. Dans ce modèle, les tables, représentées par des lignes de longueur a, séparées d'une distance b, d'une hauteur Δh et inclinées des angles β1 et β2 par rapport à l'horizontale sont éclairées par un soleil dont l'élévation projetée dans le plan orthogonal aux tables est notée γ.

Dans la figure 4 on appelle :

- γ(t) la projection de l'élévation solaire dans le plan orthogonal aux tables en ° ;
- β1(t) et β2(t) les angles des tables par rapport à l'horizontal en ° (0° à l'horizontal, 90° à la verticale) ;
- a la hauteur des tables en m ;
- b la distance inter-tables en m ; et
- Δh la différence de hauteur entre les axes de rotation des tables en m.

La quantité γ dépend de l'élévation e et de l'azimut α du soleil ainsi que du décalage angulaire du plan orthogonal aux modules ω par la formule :

[Math 1]

$$\tan \gamma = \frac{\tan e}{\sin(\alpha - \omega)}$$

Les données d'élévation et d'azimut solaire nécessaires au calcul de la quantité γ proviennent du package PVLIB2 utilisé avec le langage Python. D'après ce modèle la distance ombragée $d_h$ sur une table s'écrit :

[Math 2]

$$d_h(t) = \frac{\Delta h + \frac{a}{2}\left(\sin \beta_1(t) + \sin \beta_2(t)\right) - \tan \gamma(t)\left(b - \frac{a}{2}\left(\cos \beta_1(t) + \cos \beta_2(t)\right)\right)}{\tan \gamma(t) \cos \beta_1(t) + \sin \beta_1(t)}$$

Il est finalement possible de rapporter cette distance à la longueur de la table et borner le résultat entre 0 et 100% pour obtenir une fraction ombragée des tables par la formule :

[Math 3]

$$f_h(t) = 100 * \max\left(0, min\left(\frac{d_h(t)}{a}, 1\right)\right)$$

L'approximation bidimensionnelle résulte en une fraction ombragée linéique et non surfacique.

Les sorties de ce modèle sont des courbes représentant la fraction ombragée de tables en fonction du temps. La présence ou non d'ombre dépend essentiellement des hauteurs relatives des tables 10. Lorsque qu'une table 10 voisine est à une altitude au moins égale à celle de la table 10 mesurée, elle peut lui faire de l'ombre.

Concernant la présence des ombrages ponctuels pour une centrale photovoltaïque, telle qu'une centrale agrivoltaïque il est noté que la présence de ce type d'ombrage dépend des facteurs environnementaux d'une centrale, tels que la présence d'objets hauts tels que des arbres, etc.

A partir du modèle d'ombrage présenté ci-dessus, des données terrain et de l'ombrage inter-table il est possible de générer un modèle de GTI efficace.

Selon l'invention, le calcul pour identifier les orientations optimales pour des panneaux photovoltaïques 30 en prenant en compte la présence éventuelle des ombres comprend les étapes suivantes :

- Quantifier, à l'aide du modèle mathématique, la présence d'au moins une ombre créée par au moins une unité de production d'électricité 30 sur une autre unité de production d'électricité 30 au moment déterminé, pour identifier une unité de production d'électricité 30 ombragée,

- Réduire, à l'aide du modèle mathématique, la production d'électricité estimée de ladite unité de production d'électricité 30 ombragée, et

- Calculer, pour ce moment déterminé, au moyen du modèle mathématique et de la production d'électricité estimée réduite pour l'unité de production d'électricité 30 ombragée, la production d'électricité de la centrale photovoltaïque 100 pour une pluralité d'orientations pour chacune de ladite pluralité d'unités de production d'électricité et

- Sélectionner, parmi cette pluralité d'orientations, une orientation déterminée pour chacune des unités de production d'électricité 30 qui correspond à une position optimale pour produire de l'électricité au moyen de la centrale photovoltaïque 100 au moment déterminé en prenant en compte la production d'électricité estimée réduite pour ladite unité de production d'électricité 30 ombragée.

Selon l'invention, il est possible que le modèle mathématique comprenne des paramètres définissants des éléments structurels de la centrale photovoltaïque 100 et/ou des paramètres définissants des objets à proximité de la centrale photovoltaïque 100. Le procédé comprend en outre :

- Quantifier, à l'aide du modèle mathématique, la présence d'au moins une ombre créée par un élément structurel de la centrale photovoltaïque 100 et/ou un objet à proximité de la centrale photovoltaïque 100 sur une unité de production d'électricité 30 au moment déterminé, pour identifier une unité de production d'électricité 30 ombragée,

- Réduire, à l'aide du modèle mathématique, la production d'électricité estimée dudit module de production d'électricité 30 ombragé, et

- Calculer, pour ce moment déterminé, au moyen du modèle mathématique et de la production d'électricité estimée réduite pour l'unité de production d'électricité 30 ombragée, la production d'électricité de la centrale photovoltaïque 100 pour une pluralité d'orientations pour chacune de ladite pluralité d'unités de production d'électricité 30, et

- Sélectionner, parmi cette pluralité d'orientations, une orientation déterminée pour chacune des unités de production d'électricité 30 qui correspond à une position optimale pour produire de l'électricité au moyen de la centrale photovoltaïque 100 au moment déterminé en prenant en compte la production d'électricité estimée réduite pour ladite unité de production d'électricité 30 ombragée.

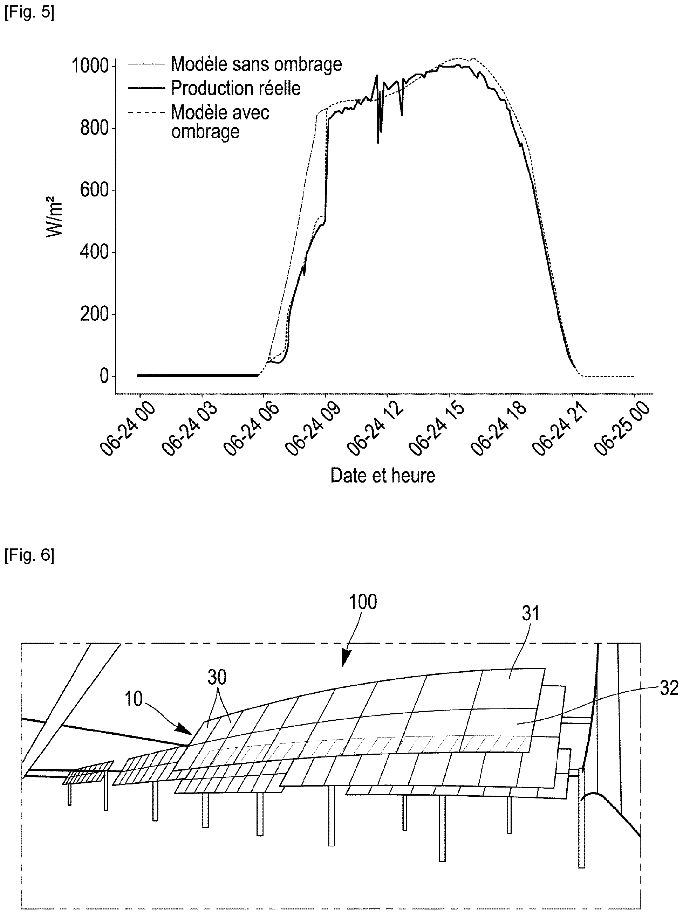

La figure 5 montre une validation expérimentale du modèle de GTI efficace. La production d'électricité d'une partie de la centrale photovoltaïque 100 est illustrée par la courbe en noir sous le nom « Production ». Les courbes en trait-point « Sans ombrage » et en pointillés « Modèle » représentent respectivement la sortie du modèle de GTI efficace en supposant un ciel parfaitement clair sans ombrage et avec les ombrage calculés pour les tables étudiées. Ces courbes sont multipliées par une constante afin que leur échelle coïncide avec celle de la production d'électricité.

Comme montré sur la figure 5, l'après-midi, les tables 10 étudiées ne sont pas ombrées. Les trois courbes coïncident. Au cours de la journée, les tables 10 ne sont pas ombrées, les courbes bleue et rouge sont identiques et leur variation ne reproduit pas fidèlement celle de la courbe noire de production. On peut expliquer cela par un ciel possiblement non parfaitement clair (vers 12:00) ainsi que par un traitement non optimal du rayonnement réfléchi et un GTI en face arrière non modélisé.

Le matin, les tables 10 subissent de l'ombre. La courbe de production en noir s'éloigne alors sensiblement de la courbe bleue « sans ombrage ». L'objectif de la modélisation (courbe rouge) est de reproduire le plus fidèlement possible les variations de production lors des périodes ombragées.

Dans le cas présenté en figure 5 on observe une bonne modélisation de l'effet d'ombrage. Le même résultat a été obtenu pour d'autres tables 10 de la centrale photovoltaïque 100, pour d'autres jours de ciel clair de printemps et d'été. On peut donc en conclure que la modélisation permet de comprendre, de reproduire et de prédire les ombrages table-table sur la centrale photovoltaïque.

Outre la possibilité, décrite ci-dessus, de calculer et de prévoir à l'avance la présence d'ombres sur les panneaux solaires, il est possible, selon l'invention, de doter l'installation solaire de capteurs permettant de déterminer la présence d'ombres sur la base d'une réduction mesurée de la production d'électricité, pendant l'utilisation de l'installation solaire.

Un facteur important pour modéliser la production de l'électricité d'une centrale photovoltaïque, telle qu'une centrale agrivoltaïque, est la façon dont sont branchés électriquement les différents panneaux photovoltaïques 30. En effet, lorsque plusieurs panneaux photovoltaïques 30 sont branchés en série, un même courant les traverse. Ce courant commun est égal au courant circulant dans l'élément dans ladite série ayant le courant le plus bas.

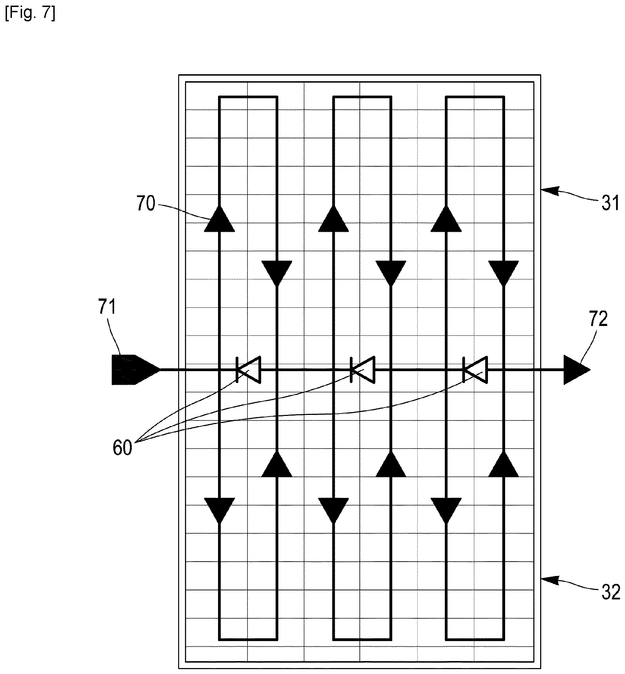

Pour expliquer l'influence du branchement des panneaux photovoltaïques 30, référence est fait aux figures 6 et 7.

La façon dont les panneaux photovoltaïques 30 sont câblés et disposés par rapport à l'ombrage est importante pour modéliser leur production d'électricité. La figure 6 montre l'exemple qu'au total neuf panneaux photovoltaïques 30 sont branchés en série par table 10. Les panneaux photovoltaïques 30 sont disposés de façon verticale.

Chaque panneau photovoltaïque 30 est divisé en deux demi-modules avec un premier module 31 qui forme la partie supérieure du panneau photovoltaïque 30 et un deuxième module 32 qui forme la partie inférieure du panneau photovoltaïque 30. Chaque demi-module 31, 32 est composé de 36 cellules photovoltaïques, pour un total de 72 cellules par panneau 30.

La figure 7 montre que le demi-module 31 et le demi-module 32 sont câblés électriquement en parallèle. Chaque tiers des cellules d'un demi-module 31 est câblé en série avec un tiers correspondant des cellules d'un demi-module 32. Ce type de branchement implique que le courant circulant dans le panneaux photovoltaïques 30 est égal à la somme du courant circulant dans la cellule ayant le courant le plus faible du demi-module 31 et de la cellule ayant le courant le plus faible du demi-module 32. Dans la figure 7, le cheminement du courant à travers des cellules photovoltaïques est schématiquement indiqué avec la référence 70. Le courant 70 se déplace d'une entrée 71 vers une sortie 72.

Si une table 10 possède neuf panneaux photovoltaïques 30 câblés en série, comme l'exemple montré en figure 6, ceci implique que le courant qui circule dans la table 10 est égal au module 30 qui a la somme du courant circulant dans le demi-module 31 et du demi-module 32 qui a le courant le plus faible de la table 10.

En faisant référence aux figures 3 et 6, il est facile d'imaginer que l'ombrage sur les demi-modules 31, 32 des panneaux 30 de la même table 10 n'est pas forcement également réparti. Les demi-modules 32, formant la partie inferieure des panneaux 30 sont, dans les exemples des figures 3 et 6 au moins partiellement couverts et les demi-modules 31 des mêmes panneaux 30 ne sont pas couverts.

En effet, lorsque l'ombrage n'est pas également réparti sur les neuf panneaux 30 d'une table 10, le branchement en série des panneaux 30 implique que le courant circulant dans la table 10 est limité par les panneaux 30 et en particulier par les demi-modules 32 les plus ombragés.

Pour optimiser la production d'électricité, si au moins une partie suffisamment importante de la surface dudit deuxième demi-module 32 est couverte par une ombre, ledit deuxième demi-module 32 soit indépendant du premier demi-module 31 pour permettre au premier demi-module 31 de produire de l'électricité sans être freiné par le courant du deuxième demi-module 32, couvert par l'ombre. C'est pourquoi dans le commerce on vend des panneaux photovoltaïques 30 équipés de deux demi-modules.

Sur la figure 7, en plus des demi-modules vu précédemment, des shunts électriques 60 permettent également une circulation plus optimale du courant en cas d'ombrage sur une partie du module sur la partie gauche ou droite du module 30. Si un ombrage est présent sur la partie gauche du module 30, alors le shunt électrique 60 la plus à gauche deviendra conducteur et permettra au courant venant de la partie droite de ne pas être freiné par les cellules ombragées de la partie gauche du module 30.

Dans la présente invention, la capacité spécifique des panneaux photovoltaïques 30 d'avoir un ou plusieurs demi-modules indépendants et de la présence de shunts électriques 60 est utilisée de façon optimale en présence d'ombrage inévitables sur une partie de la centrale pour différentes raisons.

Le courant circulant dans le panneau photovoltaïque 30, avant le shunt est égal au courant circulant dans la partie gauche au moins partiellement couvert par un ombre et après le shunt a le courant est égal au courant circulant dans la partie droite du module 30 , non couvert d'une ombre.

Dans la présente invention, ce paramètre est utilisé pour calculer l'orientation optimale des panneaux photovoltaïques 30. Lorsque les calculs montrent qu'un ou plusieurs demi-modules sont dans l'ombre, la production d'électricité à l'aide de ces demi-modules sera beaucoup plus faible que celle du demi-module non couvert d'une ombre. L'orientation optimale peut alors être calculée pour le reste de l'installation. Dans la pratique, il se peut très bien que pour optimiser toute la production d'électricité de la centrale photovoltaïque 100, il soit nécessaire d'accepter que la production d'une partie des panneaux photovoltaïque ou la production d'un ou de plusieurs demi-modules soit très faible à cause de l'ombrage. Autrement dit, les calculs peuvent montrer que pour optimiser la production de la centrale photovoltaïque en entier il vaut mieux "sacrifier" la production d'électricité potentielle d'une partie des panneaux photovoltaïque 30 et/ou la production d'électricité potentielle d'un ou de plusieurs demi-modules de la centrale photovoltaïque.

On constate que le type de câblage décrit ci-dessus justifie l'approximation linéique décrite en référence à la figure 4, ci-dessus. On appelle la fraction linéique ombragée le rapport entre la hauteur maximale d'ombre sur une table 10 et la hauteur de la table 10. Par exemple, dans la figure 6 on constate que la hauteur maximale de l'ombre, indiquée par la surface ombragée sur l'ensemble de la table 10 est approximativement de 25%.

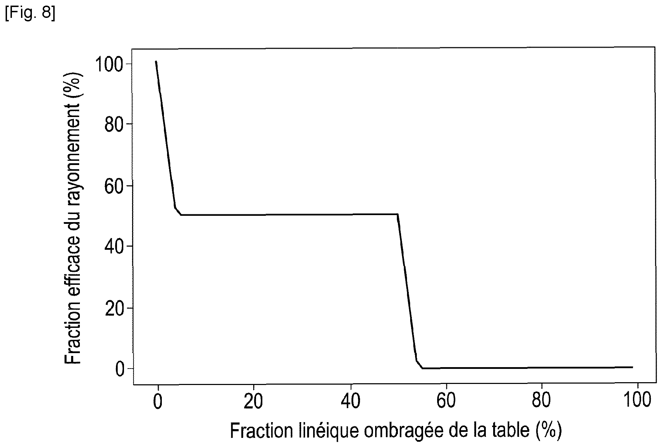

Prenant ceci en considération, un modèle de fraction de rayonnement utile pour la génération électrique reçu par la table 10 en fonction de la fraction linéique ombragée de cette dernière a été développé. Ce modèle est montré en figure 8.

La figure 8 montre la fraction efficace pour produire de l'électricité du rayonnement solaire incident sur une table 10 en fonction de la fraction linéique ombragée de celle-ci. Tant que les cellules positionnées en bas des panneaux 30 ne sont pas entièrement ombragées la fraction efficace du rayonnement décroît linéairement avec la fraction ombragée. Dans l'exemple des figure 7 et 8, chaque panneau 30 est composé de 24 cellules dans sa hauteur. Cela veut dire que les cellules positionnées en bas des panneaux 30 ne sont pas entièrement ombragées si la fraction linéique est inférieure à la valeur seuil de $1/24 \approx 4\%$ d'ombrage du panneau 30.

Comme montré dans la figure 8, au-delà de la valeur seuil de 1/24 d'ombrage et jusqu'en haut du demi-module inférieur 32, comme au moins une cellule du demi-module est entièrement ombragée, l'ensemble du demi-module inférieur 32 est perdu et la fraction efficace du rayonnement reçu par la table 10 est égale à celle reçue par le demi-module supérieur 31, soit 50%.

La même évolution décrite ci-dessus pour le demi-module inférieur 32 se produit pour le demi-module supérieur 31, pendant que l'ombrage s'étend jusqu'au sommet des panneaux 30 de la table 10.

En référence à ce qui précède, il convient en outre de noter que selon l'invention, une ou plusieurs tables 10 peuvent-être placées en série et forment ensemble un « string ». Afin d'optimiser la production d'électricité de l'ensemble de la centrale photovoltaïque 100, il est possible que les calculs au moyen du modèle mathématique montrent que la production d'un string ou d'une partie du string doit être sacrifiée pour optimiser la production totale d'électricité de la centrale photovoltaïque 100. A la lecture de ce qui précède, il apparaît clairement que selon l'invention, une orientation idéale des panneaux peut être calculée pour produire de l'électricité à tout moment de la journée et à tout moment de l'année.

En complément de la description de l'utilisation de l'invention pour optimiser la production optimale d'électricité à l'aide de la centrale photovoltaïque 100, il est noté que le résultat des calculs et l'orientation des panneaux photovoltaïques 30 peuvent, entre autres, permettre à l'utilisateur d'obtenir les modes de pilotage résultants suivants :

- Tracking horaires,
- Tracking zéro ombrage,
- Tracking optimise par demi module, et
- Tracking mixte.

De plus, selon l'invention décrite ci-dessus, l'utilisation du modèle mathématique permet, au choix de l'utilisateur, de contrôler la production d'électricité.

Les modes de réalisation précédemment décrits sont indiqués à titre d'exemples uniquement.

**Revendications**

**1.** Procédé mis en oeuvre par ordinateur pour optimiser la production d'électricité d'une centrale photovoltaïque, la centrale photovoltaïque comprenant une pluralité d'unités de production d'électricité, les unités de production d'électricité étant chacune conçues pour modifier leur orientation par rapport au soleil afin d'optimiser leur production d'électricité à tout moment, les unités de production d'électricité étant connectées à des moyens de commande pour contrôler ladite orientation, le procédé comprenant les étapes suivantes :

- Obtenir un modèle mathématique de la centrale photovoltaïque comprenant les positions des différentes unités de production d'électricité, les distances mutuelles entre ces unités, l'irradiance et la position du soleil par rapport à la centrale photovoltaïque,
- Calculer, pour un moment déterminé, au moyen du modèle mathématique et de la position du soleil à ce moment déterminé, la production d'électricité de la centrale photovoltaïque pour une pluralité d'orientations pour chacune de ladite pluralité d'unités de production d'électricité, en tenant compte pour chacune des unités de production d'électricité de leur orientation instantanée et de leur production d'électricité instantanée correspondante,

- Sélectionner, parmi cette pluralité d'orientations, une orientation déterminée pour chacune des unités de production d'électricité qui correspond à un ensemble de positions optimales pour produire de l'électricité au moyen de la centrale photovoltaïque au moment déterminé, et

- Générer des instructions pour que les moyens de commande orientent chacune des unités de production d'électricité vers leur orientation déterminée respective.

2. Procédé selon la revendication 1, dans lequel le modèle mathématique comprend des paramètres définissant la zone de l'implantation de la centrale photovoltaïque, telles que la latitude, la longitude, l'altitude, l'orientation, l'albédo du sol.

3. Procédé selon la revendication 1 ou 2, dans lequel l'étape de calcul pour le moment déterminé, au moyen du modèle mathématique et de la position du soleil à ce moment déterminé, de la production d'électricité de la centrale photovoltaïque pour une pluralité d'orientations pour chacune de ladite pluralité d'unités de production d'électricité comprend :

a) Calculer, pour une première orientation de la pluralité d'unités de production d'électricité, une première production instantanée d'électricité de la centrale photovoltaïque,

b) Modifier l'orientation d'au moins une première unité de production d'électricité de ladite pluralité d'unités de production d'électricité pour obtenir une orientation modifiée de la pluralité d'unités de production d'électricité,

c) Calculer pour l'orientation modifiée de la pluralité d'unités de production d'électricité une production instantanée modifiée d'électricité de la centrale photovoltaïque, et

d) Répéter les étapes b) et c) pour ainsi obtenir la production instantanée de l'électricité de la centrale photovoltaïque pour une pluralité d'orientations pour chacune de ladite pluralité d'unités de production d'électricité.

4. Procédé selon la revendication 1, 2 ou 3, dans laquelle le procédé comprend en outre :

- Quantifier, à l'aide du modèle mathématique, la présence d'au moins une ombre créée par au moins une unité de production d'électricité sur une autre unité de production d'électricité au moment déterminé, pour identifier une unité de production d'électricité ombragée,

- Réduire, à l'aide du modèle mathématique, la production d'électricité estimée de ladite unité de production d'électricité ombragée, et

- Calculer, pour ce moment déterminé, au moyen du modèle mathématique et de la production d'électricité estimée réduite pour l'unité de production d'électricité ombragée, la production d'électricité de la centrale photovoltaïque pour une pluralité d'orientations pour chacune de ladite pluralité d'unités de production d'électricité et

- Sélectionner, parmi cette pluralité d'orientations, une orientation déterminée pour chacune des unités de production d'électricité qui correspond à un ensemble de positions optimales pour produire de l'électricité au moyen de la centrale photovoltaïque au moment déterminé en prenant en compte la production d'électricité estimée réduite pour ladite unité de production d'électricité ombragée.

5. Procédé selon l'une quelconque des revendications précédentes, dans lequel le modèle mathématique comprend des paramètres définissants des éléments structurels de la centrale photovoltaïque et/ou des paramètres définissants des objets à proximité de la centrale photovoltaïque, le procédé comprenant en outre :

- Quantifier, à l'aide du modèle mathématique, la présence d'au moins une ombre créée par un élément structurel de la centrale photovoltaïque et/ou un objet à proximité de la centrale photovoltaïque sur une unité de production d'électricité au moment déterminé, pour identifier une unité de production d'électricité ombragée,

- Réduire, à l'aide du modèle mathématique, la production d'électricité estimée dudit module de production d'électricité ombragé, et

- Calculer, pour ce moment déterminé, au moyen du modèle mathématique et de la production d'électricité estimée réduite pour l'unité de production d'électricité ombragée, la production d'électricité de la centrale photovoltaïque pour une pluralité d'orientations pour chacune de ladite pluralité d'unités de production d'électricité, et

- Sélectionner, parmi cette pluralité d'orientations, une orientation déterminée pour chacune des unités de production d'électricité qui correspond à une position optimale pour produire de l'électricité au moyen de la centrale photovoltaïque au moment déterminé en prenant en compte la production d'électricité estimée réduite pour ladite unité de production d'électricité ombragée.

6. Procédé selon la revendication 4 ou 5, dans lequel la production d'électricité estimée pour l'unité de production d'électricité ombragée est réduite conformément à une fonction mathématique préalablement établie à l'aide des caractéristiques électriques dudit module ombragé et de sa connexion électrique.

7. Centrale photovoltaïque pour la production d'électricité comprenant :

- Une pluralité d'unités de production d'électricité, les unités de production d'électricité étant chacune conçues pour modifier leur orientation par rapport au soleil afin d'optimiser leur production d'électricité à tout moment, les unités de production d'électricité étant connectées à des moyens de commande pour contrôler ladite orientation,
- des moyens de calcul adaptés pour héberger un modèle mathématique pour la centrale photovoltaïque comprenant les positions des différentes unités de production d'électricité, les distances mutuelles entre ces unités, l'irradiance et la position du soleil par rapport à la centrale photovoltaïque, et adaptés pour calculer pour un moment déterminé, au moyen du modèle mathématique et de la position réelle du soleil, la production d'électricité de la centrale photovoltaïque pour une pluralité d'orientations pour chacune de ladite pluralité d'unités de production d'électricité, en tenant compte, pour chacune des unités de production d'électricité, de leur orientation instantanée et de leur production instantanée d'électricité correspondante, les moyens de calcul étant en outre adaptés à la sélection, parmi ladite pluralité d'orientations, d'une orientation déterminée pour chacune des unités de production d'électricité qui correspond à une position optimale pour produire de l'électricité au moyen de la centrale photovoltaïque au moment déterminé, et à la génération d'instructions pour les moyens de commande, et
- des moyens de contrôle connectés aux moyens de calcul et adaptés pour recevoir des instructions desdits moyens de calcul et pour orienter chacune des unités de production d'électricité vers leur orientation respective déterminée.

8. Centrale photovoltaïque selon la revendication 7, comprenant au moins une unité de production d'électricité avec un premier module connecté en parallèle avec au moins un deuxième module adjacent, et dans lequel le premier et le deuxième module comprennent des cellules productrices d'électricité, l'unité de production d'électricité étant pourvue de diodes de shunt permettant la création d'un chemin pour le courant électrique entre une entrée et une sortie de l'unité de production d'électricité.

9. Produit programme d'ordinateur comprenant des instructions qui, lorsque le programme est exécuté par un ordinateur, conduisent celui-ci à mettre en oeuvre le procédé selon l'une des revendications 1 à 6.

10. Support d'enregistrement lisible par ordinateur comprenant des instructions qui, lorsqu'elles sont exécutées par un ordinateur, conduisent celui-ci à mettre en oeuvre le procédé selon l'une des revendications 1 à 6.

[Fig. 1]

[Fig. 2]

[Fig. 3]

[Fig. 4]

[Fig. 5]

[Fig. 6]

[Fig. 7]

[Fig. 8]

Europäisches
Patentamt

European
Patent Office

Office européen
des brevets

# RAPPORT DE RECHERCHE EUROPEENNE

Numéro de la demande

EP 24 21 9919

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2022/128933 A1 (COMMISSARIAT ENERGIE ATOMIQUE [FR]) 23 juin 2022 (2022-06-23) | 1-3,7-10 | INV. H02S50/00 |
| A | * page 10, ligne 1 - page 23, ligne 33; revendications 1-16; figures 3,4 * ----- | 4-6 | |
| X | KR 2022 0103402 A (KOREA INST ENERGY RES [KR]) 22 juillet 2022 (2022-07-22) * revendications 1-11; figures 1-3 * ----- | 1,7 | |

**DOMAINES TECHNIQUES RECHERCHES (IPC)**

H02S

Le présent rapport a été établi pour toutes les revendications

| Lieu de la recherche | Date d'achèvement de la recherche | Examinateur |
|---|---|---|
| La Haye | 27 février 2025 | Boero, Mauro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 21 9919

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-02-2025

| Document brevet cité au rapport de recherche | Date de publication | Membre(s) de la famille de brevet(s) | Date de publication |
|---|---|---|---|
| WO 2022128933 A1 | 23-06-2022 | EP 4264824 A1 | 25-10-2023 |
| | | FR 3118363 A1 | 24-06-2022 |
| | | WO 2022128933 A1 | 23-06-2022 |
| KR 20220103402 A | 22-07-2022 | AUCUN | |

Pour tout renseignement concernant cette annexe : voir Journal Officiel de l'Office européen des brevets, No.12/82